# EUROPÄISCHE PATENTSCHRIFT

(11) **EP 1 283 194 B1**
(45) Veröffentlichungstag und Bekanntmachung des Hinweises auf die Patenterteilung: **10.05.2006**
(21) Anmeldenummer: 02016169.1
(22) Anmeldetag: 20.07.2002
(51) Int. Cl.: C03B 17/04

(54) **Vorrichtung zum Herstellen eines Glasrohres oder eines Glasstabes mittels einer Ziehpfeife**
Apparatus for manufacturing a glass tube or rod using a draw pipe
Appareil pour la fabrication d'un tube ou d'une barre de verre au moyen d'un tube d'étirage

(30) Priorität: 04.08.2001 DE 10138402
(43) Veröffentlichungstag der Anmeldung: 12.02.2003
(73) Patentinhaber: Schott AG, 55122 Mainz (DE)
(72) Erfinder: Dick, Erhard, 95701 Pechbrunn (DE); Fischer, Erich, 95666 Mitterteich (DE); Fuchs, Roland, 95666 Leonberg (DE); Riedl, Markus, 95666 Mitterteich (DE); Lange, Ulrich, Dr., 55270 Mainz (DE); Langsdorf, Andreas, Dr., 55218 Ingelheim (DE); Kunert, Christian, 55122 Mainz (DE)
(74) Vertreter: Dr. Weitzel & Partner

(56) Entgegenhaltungen:
- DE-C- 19 960 210
- GB-A- 943 236

## Beschreibung

Die Erfindung betrifft eine Vorrichtung zum Herstellen eines Glasstranges nach dem Ziehpfeifenverfahren.

Ein bekanntes Verfahren ist das Danner-Verfahren. Eine Danner-Vorrichtung umfaßt ein gegen die Horizontale leicht geneigtes Rohr, die sogenannte Danner-Pfeife, das langsam umläuft, und das sich in einer Heizmuffel befindet. Auf das höher gelegene Ende der Pfeife wird ein kontinuierlicher Strom einer Glasschmelze aufgebracht, der einen laminaren Rieselfilm auf der Mantelfläche der Pfeife bildet. Am tieferen Ende der Pfeife wird der Glasstrang abgezogen, und zwar entweder als Vollmaterial oder als Rohr. Nach dem Umlenken in die Horizontale durchläuft der erstarrende Strang eine Rollenbahn bis zur Ziehmaschine. Sodann erfolgt eine Zerlegung in Abschnitte einer bestimmten Länge.

Der Glasstrom hat bei seinem Auftreffen auf das höher gelegene Aufgabeende der Danner-Pfeife eine Temperatur von etwa 1300 Grad Celsius, und an der Zwiebel eine Temperatur von etwa 1000 Grad. Es findet somit ein Abkühlprozeß vom Aufgabeende zum Abgabeende statt. Der Abkühlprozeß verläuft durch die Zufuhr von Wärme von der Heizmuffel in kontrollierter Weise.

Bei der Herstellung von Glassträngen - massiven Stäben oder Rohren - kommt es je nach Anwendungsfall auf hohe und höchste Produktqualitäten an. Wichtige Qualitätsanforderungen betreffen die Einhaltung der Wanddicke bei Glasrohren sowie generell bei Glasrohren und bei Glasstäben die Einhaltung der Außendurchmesser.

Ein weiteres, bekanntes Glasrohr-Ziehverfahren ist das Vello-Verfahren. Weitere Verfahren sind bekannt, die im wesentlichen Abwandlungen der beiden genannten Verfahren sind.

Beim Danner-Verfahren hängt die Dicke des Glasbelages von der Neigung der Pfeife, der Temperatur der die Pfeife umgebenden Heizmuffel sowie weiteren Einflußgrößen ab. Diese Größen unterliegen jedoch Schwankungen. Damit ändert sich auch die Dicke des Glasbelages auf der Pfeife. Dies wirkt sich negativ auf die geometrischen Merkmale wie Wanddicke und Außendurchmesser des Glasrohres aus.

GB-A-943 236, das als nächstliegender Stand der Technik angesehen wird, offenbart eine Vorrichtung gemäß dem Obergrifff des Anspruchs 1. DE-C-199 60 210 offenbart eine Vorrichtung zum Herstellen eines Glasstranges mit einer Kalibriereinrichtung, die nicht den Glasbelag sondern den fast in seiner endgültigen Form Glasstrang umgibt.

Bisher haben die bestehenden Anlagen der genannten Art den Anforderungen nicht in vollem Maße genügt. Das erzeugte Produkt wies Qualitätsschwankungen auf, die zumindest bei gewissen Anwendungsfällen nicht akzeptabel sind.

Der Erfindung liegt die Aufgabe zugrunde, eine Vorrichtung der genannten Art derart zu gestalten, daß damit ein einwandfreies Produkt erzeugt werden kann, mit dem sich alle wichtigen Eigenschaften in engen Toleranzen sicher stellen lassen, insbesondere bezüglich der Wanddicke und des Außendurchmessers.

Diese Aufgabe wird durch die Merkmale von Anspruch 1 gelöst.

Im Gegensatz zu den bisher angewandten Rohrziehverfahren mit freier Verformung der Außenfläche des Glasrohres sind die Erfinder einen anderen Weg gegangen. Dem gemäß haben sie eine Kalibriervorrichtung vorgesehen. Dabei hat die Kalibriervorrichtung eine lichte Weite, die derart bemessen sein kann, daß sie den Glasfilm berührend umschließt. Die Kalibriervorrichtung kann jedoch auch Übermaß haben, so daß zwischen seiner Innenfläche und dem Glasfilm ein Ringspalt verbleibt.
Jegliche Schwankungen der Glasfilmdicke werden beim Passieren der Kalibriervorrichtung ausgeglichen. Dies findet sowohl bei Kontakt zwischen Kalibriervorrichtung und Glasfilm statt, als auch dann, wenn kein unmittelbarer Kontakt besteht, sondern wenn zwischen der Kalibriervorrichtung und dem Glasfilm ein Gasstrom eingeleitet wird. In diesem Falle wird das Prinzip der Gasfilmlevitation angewendet. Hierdurch wird eine besonders glatte und homogene Glasoberfläche erzielt, was sich positiv auf die optischen Eigenschaften des Glasrohres auswirkt.

Die Kalibriervorrichtung kann in einem solchen Falle aus einer konzentrisch um die Pfeife herum angeordneten Druckkammer bestehen. Die Innenfläche kann aus porösem, gasdurchlässigem Material bestehen, durch welches unter Druck stehendes Gas gegen den Glasfilm gerichtet wird.

Vorzugsweise wird hierbei poröses Edelmetallblech verwendet, beispielsweise Platin oder Platinlegierungen. Auch kommen poröse Keramiken wie SiC oder Silimanit in Betracht.

Es sind auch beide Möglichkeiten denkbar, nämlich daß die Kalibriervorrichtung zwar berührend den Glasfilm umgibt, jedoch aus porösem Material besteht und von einem Gasstrom durchsetzt ist, der wiederum gegen die Glasoberfläche gerichtet ist und somit eine gewisse Gaspolsterschmierung erzeugt.
Zweckmäßigerweise wird eine Justiereinrichtung vorgesehen, mit der sich die Position der Kalibriervorrichtung relativ zur Ziehpfeife einstellen läßt. Die Positionierung kann sowohl senkrecht zur Pfeifenachse als auch parallel hierzu vorgesehen werden. Insbesondere die Positionierung senkrecht zur Pfeifenachse ist wichtig, da hiervon die Gleichmäßigkeit des Glasrohres über den Umfang abhängt. Dies setzt voraus, daß beide Positionen ermittelt werden, beispielsweise mit Sensoren oder mit einer mathematischen Simulation.
Auch ist das Positionieren der Kalibriervorrichtung in Achsrichtung der Pfeife von Bedeutung. Treten nämlich Temperatur- oder Masseschwankungen auf, so kann dies vor der Kalibriervorrichtung zu einem Materialstau kommen, was sich in Form eines Wulstes zeigt. Bei Einsatz der entsprechenden Meßgeräte wie insbesondere Sensoren zum Erfassen des Außendurchmessers vor Eintritt in die Öffnung der Kalibriervorrichtung läßt sich die Bildung eines übermäßig starken Wulstes vermeiden.

Die Erfindung ermöglicht es, Glasstränge bei engsten Fertigungstoleranzen zu erzeugen. Die Abweichungen des Außendurchmessers vom Sollwert liegen nach oben und nach unter 0,5 Prozent.

Die Erfindung ist bei den folgenden Anwendungsbereichen einsetzbar:
* Außendurchmesser von 0,5 bis 70 mm
* bei Einsatz des Danner-, Vello-, A-Zug- und des Wiederziehverfahrens
* für alle Glasarten zur Rohr- und Stabherstellung, somit nicht nur für Glasröhren, sondern auch für massive Glasstränge.

Die Erfindung ist anhand der Zeichnung näher erläutert. Darin ist im einzelnen folgendes dargestellt:
- Figur 1: zeigt schematisch den Aufbau einer Vorrichtung mit einer Rohrziehanlage nach Danner in einer Seitenansicht.
- Figur 2: zeigt den Gegenstand der Figur 1 in einem Schnitt, der in einer zur Ziehpfeife senkrechten Ebene gelegt ist.

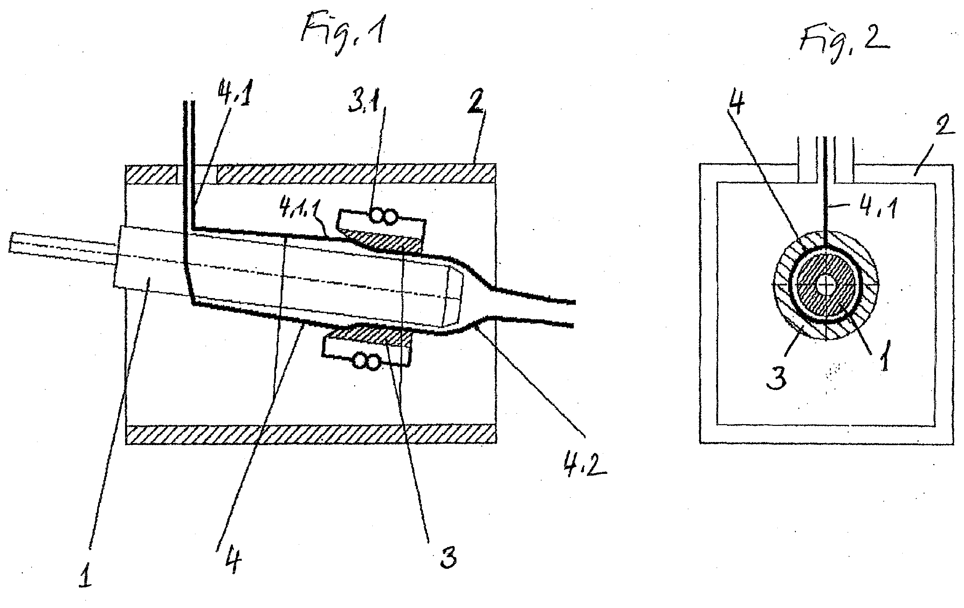

Die in Figur 1 gezeigte Vorrichtung weist eine Dannerpfeife 1 auf. Die Dannerpfeife 1 ist von einer Heizmuffel 2 umgeben. Der Dannerpfeife 1 ist eine Kalibriereinrichtung 3 zugeordnet, die im wesentlichen ringförmig ist.

Man erkennt einen Glasbelag 4. Dieser ist aus einem Glasstrom 4.1 gebildet. Der Glasstrom gelangt durch eine Öffnung 2.1 in der Heizmuffel 2 zum Aufgabeende der Dannerpfeife 1. Dort legt er sich auf die Mantelfläche der Dannerpfeife 1 in Gestalt einer Hülse oder eines Rohres. Er wird am Abgabeende der Dannerpfeife 1 als sogenannte Ziehzwiebel 4.2 abgezogen und einer weiteren Behandlung zugeführt, beispielsweise einer Umlenkung, einer Kühlung oder einem Ablängen.

Die Dannerpfeife 1 ist mit ihrer Längsachse 1.1 gegen die Horizontale leicht geneigt angeordnet, beispielsweise unter einem.Winkel von 10 bis 20 Grad. Sie ist freikragend gelagert und antreibbar, so daß sie um ihre Längsachse 1.1 umlaufen kann.

Die Kalibriereinrichtung 3 ist das entscheidende, erfindungsgemäße Element. Es ist im vorliegenden Falle ringförmig und besteht aus einem Edelmetall, beispielsweise aus Platin. Seine innere Mantelfläche befindet sich in einem gewissen Abstand von der Mantelfläche der Dannerpfeife 1 und damit auch von dem Glasbelag 4. Die Kalibriereinrichtung 3 ist außerdem beheizbar - siehe die schematisch angedeutete Heizeinrichtung 3.1.

Die Kalibriereinrichtung 3 weist noch folgende Besonderheiten auf, die hier nicht im einzelnen dargestellt sind:
Sie ist mit Kanälen versehen, die auf ihrer inneren Mantelfläche münden, gegen Glasbelag 4 gerichtet und an einen Gasstrom angeschlossen sind. Der Gasstrom ist in seiner Stärke variabel. Außerdem kann er temperierbar sein.
Wie man sieht, weist der Glasbelag 4 im Bereich des Einlaufs einen Ringwulst 4.1.1 auf. Die Kalibriereinrichtung 3 ist trichterartig gestaltet, so daß der Ringwulst 4.1.1 beim Passieren der Kalibriereinrichtung 3 auf einen bestimmten Durchmesser zusammengedrückt und damit kalibriert wird, so daß er mit exaktem Außenmaß die Kalibriereinrichtung 3 und schließlich die gesamte Vorrichtung verläßt.

Außerdem ist die Kalibriereinrichtung 3 in axialer Richtung, das heißt parallel zur Längsachse 1.1 der Dannerpfeife 1 verschiebbar. Hiermit kann Einfluß genommen werden auf Unregelmäßigkeiten des Ringwulstes 4.1.1. Wird dieser aufgrund des Einflusses anderer Parameter zu klein oder zu groß, so kann durch Axialverschieben der Kalibriereinrichtung 3 eine Korrektur vorgenommen werden.

Die Kalibriereinrichtung 3 ist aber auch senkrecht zur Längsachse 1.1 der Dannerpfeife verschiebbar. Damit läßt sich die Dicke oder Wandstärke des Glasbelages über dessen Umfang gesehen justieren, um eine über den Umfang konstante Dicke zu erzielen.

## Patentansprüche

1. Vorrichtung zum Herstellen eines Glasstranges, zum Beispiel eines Glasrohres (4) oder eines Glasstabes, umfassend:
eine Ziehpfeife (1);
eine diese umschließende Heizmuffel (2);
eine Düse zum Aufbringen eines Glasstromes (4.1), an deren einem Ende (Aufgabeende) zwecks Bildens eines Glasbelages (4), der am anderen Ende (Abgabeende) als Ziehzwiebel (4.2) abgenommen wird;
eine Kalibriereinrichtung (3) **dadurch gekennzeichnet, dass**
die Kalibriereinrichtung (3) den Glasbelag (4) umgibt;
die Kalibriereinrichtung (3) ist derart bemessen, dass zwischen ihrer Innenfläche und dem Glasbelag (4) ein Ringspalt verbleibt;
es ist eine Einrichtung zum Einbringen eines Gaspolsters in den Ringspalt vorgesehen;
die Kalibriereinrichtung (3) weist Bohrungen auf, mit denen ein Gas durch ein poröses Material hindurch gegen den Glasbelag (4) leitbar ist;
die Kalibriereinrichtung (3) besteht aus porösem Material, beispielsweise aus Keramik oder aus Kohle.

2. Vorrichtung nach Anspruch 1, **dadurch gekennzeichnet, dass** eine Justiereinrichtung zum Justieren der Position der Kalibriereinrichtung (3) senkrecht zur Achse (1.1) der Ziehpfeife (1) vorgesehen ist.

3. Vorrichtung nach Anspruch 1 oder 2, **dadurch gekennzeichnet, dass** eine Justiereinrichtung zum Justieren der Position der Kalibriereinrichtung (3) parallel zur Längsachse (1.1) der Ziehpfeife (1) vorgesehen ist.

4. Vorrichtung nach einem der Ansprüche 1 bis 3, **dadurch gekennzeichnet, dass** der Einlaufbereich der Kalibriereinrichtung (3) trichterartig ausgebildet ist.

5. Vorrichtung nach einem der Ansprüche 1 bis 4, **dadurch gekennzeichnet, dass** der Auslaufbereich der Kalibriereinrichtung (3) trichterförmig ausgebildet ist.

6. Vorrichtung nach einem der Ansprüche 1 bis 5, **dadurch gekennzeichnet, dass** das gegen den Glasbelag (4) leitbare Gas Luft ist.

7. Vorrichtung nach einem der Ansprüche 1 bis 6, **gekennzeichnet durch** die folgenden Merkmale:
es sind Sensoren zum Erfassen des Außendurchmessers des Glasbelages (4) an verschiedenen Stellen entlang der Achse (1.1) der Ziehpfeife (1) vorgesehen;
es ist ein Regler vorgesehen, der bei Aufnahme eines entsprechenden Signales der Sensoren ein Verschieben der Kalibriereinrichtung (3) in Richtung der Längsachse (1.1) der Ziehpfeife bewirkt.

## Claims

1. An apparatus for producing a strand of glass, e.g. a glass tube (4) or glass rod, comprising:
a drawing blowpipe (1);
a heating muff (2) enclosing the same;
a nozzle for applying a glass stream (4.1) at its one end (feeding end) for forming a glass layer (4) which is removed at the other end (delivery end) as a drawing onion (4.2);
a calibrating device (3), **characterized in that** the calibration device (3) encloses the glass coating (4);
the calibrating device (3) is dimensioned in such a way that an annular gap remains between its interior surface and the glass coating (4);
a device for introducing a gas cushion into the annular gap is provided;
the calibrating device (3) comprises bores with which the gas can be guided through a porous material against the glass coating (4);
the calibrating device (3) consists of porous material, e.g. of ceramic or coal.

2. An apparatus according to claim 1, **characterized in that** an adjusting device for adjusting the position of the calibrating device (3) is provided perpendicularly to the axis (1.1) of the drawing pipe (1).

3. An apparatus according to claim 1 or 2, **characterized in that** an adjusting device for adjusting the position of the calibrating device (3) is provided parallel to the longitudinal axis (1.1) of the drawing pipe (1).

4. An apparatus according to one of the claims 1 to 3, **characterized in that** the entry zone of the calibrating device (3) is provided with a funnel-like configuration.

5. An apparatus according to one of the claims 1 to 4, **characterized in that** the exit zone of the calibrating device (3) is provided with a funnel-like configuration.

6. An apparatus according to one of the claims 1 to 5, **characterized in that** the gas which can be guided against the glass coating (4) is air.

7. An apparatus according to one of the claims 1 to 6, **characterized by** the following features:
sensors are provided for detecting the outside diameter of the glass coating (4) at different places along the axis (1.1) of the drawing pipe (1);
a controller is provided which on receiving a respective signal of the sensors causes a displacement of the calibrating device (3) in the direction of the longitudinal axis (1.1) of the drawing pipe.

## Revendications

1. Dispositif pour fabriquer un jet d'extrusion de verre, par exemple un tube de verre (4) ou une barre de verre, comprenant
un piston à tréfiler (1) ;
un manchon chauffant entourant celui-ci (2);
une buse destinée à amener un courant de verre (4.1) à une de ses extrémités (extrémité de dépose) pour former un dépôt de verre (4) qui est retiré à l'autre extrémité (extrémité d'extraction) sous la forme d'une ampoule tréfilée (4.2) ;
un dispositif de calibrage (3),
**caractérisé en ce que** le dispositif de calibrage (3) entoure le dépôt de verre (4),
le dispositif de calibrage (3) est dimensionné de telle manière qu'il reste entre sa surface intérieure et le dépôt de verre (4) un espace annulaire ;
il est prévu un dispositif pour introduire une couverture gazeuse dans l'espace annulaire ;
le dispositif de calibrage (3) présente des trous par lesquels un gaz peut être amené contre le dépôt en verre (4) à travers un matériau poreux ;
le dispositif de calibrage (3) se compose d'un matériau poreux, par exemple de céramique ou de carbone.

2. Dispositif selon la revendication 1, **caractérisé en ce qu'**un dispositif d'ajustement est prévu pour ajuster la position du dispositif de calibrage (3) perpendiculairement à l'axe (1.1) du piston à tréfiler (1).

3. Dispositif selon la revendication 1 ou 2, **caractérisé en ce qu'**un dispositif d'ajustement est prévu pour ajuster la position du dispositif de calibrage (3) parallèlement à l'axe longitudinal (1.1) du piston à tréfiler (1).

4. Dispositif selon l'une quelconque des revendications 1 à 3, **caractérisé en ce que** la zone d'entrée du dispositif de calibrage (3) est en forme d'entonnoir.

5. Dispositif selon l'une quelconque des revendications 1 à 4, **caractérisé en ce que** la zone de sortie du dispositif de calibrage (3) est en forme d'entonnoir.

6. Dispositif selon l'une quelconque des revendications 1 à 5, **caractérisé en ce que** le gaz qui peut être amené contre le dépôt de verre (4) est de l'air.

7. Dispositif selon l'une quelconque des revendications 1 à 6, **caractérisé en ce que** :
il est prévu des capteurs pour détecter le diamètre extérieur du dépôt de verre (4) en différents points le long de l'axe (1.1) du piston à tréfiler (1);
il est prévu un régulateur qui provoque, lorsqu'il reçoit un signal correspondant des capteurs, un déplacement du dispositif de calibrage (3) dans le sens de l'axe longitudinal (1.1) du piston à tréfiler.
